# EUROPEAN PATENT SPECIFICATION

(11) **EP 1 872 049 B1**
(45) Date of publication and mention of the grant of the patent: **20.05.2009**
(21) Application number: 06754791.9
(22) Date of filing: 21.04.2006
(51) Int. Cl.: F16L 55/165

(54) **UV-CURABLE TUBULAR LINING MATERIAL FOR PIPELINES**
SCHLAUCHFÖRMIGES, UV-HÄRTBARES AUSKLEIDUNGSMATERIAL FÜR ROHRLEITUNGEN
MATERIAU DE CHEMISAGE TUBULAIRE POLYMERISABLE AUX UV POUR CONDUITES

(30) Priority: 22.04.2005 EP 05103293
(43) Date of publication of application: 02.01.2008
(73) Proprietor: NordiTube Technologies AB, B-4000 Liege/Sclessin (BE)
(72) Inventor: HEUSER, Mirko, 76761 Rülzheim (DE)
(74) Representative: Kihn, Pierre Emile Joseph
(86) International application number: PCT/EP2006/061754
(87) International publication number: WO 2006/111580

(56) References cited:
- EP-A- 1 262 708
- DE-A1- 19 817 413
- US-A- 4 350 548

## Description

### Introduction

The present invention relates to a lining material for pipelines, such as water, sewage or gas pipes, which is capable of forming as a lining thereof a strong pipe in the pipe.

For a number of years, tubular lining materials are used for the purpose of trench-less repair and reinforcement of damaged or superannuated pipelines, which are buried in the ground, since pipe-exchange works especially for underground pipelines involved much cost and difficulty. Pipe-lining methods developed at an early stage, for example, those disclosed in U.S. Pat. 3,132,062 and 3,494,813 were rather primitive and had a number of drawbacks in actual pipe-lining operations. Under the circumstances, various improvements were made in both pipe-lining methods and lining materials used therein.

Several improved lining methods have been proposed, for example, in U.S. Pat. Nos. 4,368,091; 4,334,943; 4,350,548; 4,427,480 and 4,334,943 have been noted as excellent methods for lining pipelines. According to these methods, a tubular lining material having a curable binder or resin applied onto the interior surface thereof is inserted into pipelines and allowed to advance therein while turning it inside out (evagination or reversion), whereby the lining material is applied to the inside surface of the pipeline with the resin being interposed there between. The Standard practice for the Installation of Cured-In-Place Pipe by Inversion Lining is described in more detail in ASTM F 1216 "installation Procedure".

An alternative well-known technique to insert the lining material into the pipeline is the so-called "Pull-in-Place" method whereby the lining material is pulled into the pipeline and then inflated without reversion. When using the Pull-in-Place method for installation, the liner is drawn into the existing pipe by means of a winch cable. With the ends of the liner sealed, the liner will be expanded by air and/or steam pressure for curing the composite. Pressure is maintained until the liner cure is complete. Such liners usually further comprise an outer protective sheet which protects the tubular jacket impregnated with resin from abrasion. The standard Pull-in-Place method is described in more detail in ASTM F1743-96 "Rehabilitation of Existing Pipelines and Conduits by Pulled-in-Place Installation of Cured-in-Place Thermosetting Resin Pipe (CIPP)".

Usually the lining materials for the reversion type of installation are made of a tubular jacket made of a felt and/or fabric and/or other porous flexible or foamed material which is impregnated with a synthetic resin and have a water-proof and/or air impervious sheet or coating thereon.

The synthetic polymer used for forming the air-impervious sheet or coating of the tubular jacket is selected from various kinds of flexible synthetic polymers such as polyurethane, polyethylene, polypropylene, a copolymer of PE-PA etc.

The tubular jacket is overlaid with the air-impervious coating according to a conventional coating method after the manufacture of the tubular jacket. For example, the polymer is molten and applied from an extruder onto the exterior surface of the tubular jacket. The polymer is allowed to penetrate sufficiently into interstices or textures of the jacket thereby assuring bonding of the polymer coat onto the tubular jacket by means of the so-called "anchoring action" of the polymer. The thickness of the coating formed on the exterior surface of the tubular jacket may be chosen according to various requirements, such as diameter, material, installation parameter or the like. Usually, the coat is used with a thickness within the range of 0.2-2.0 mm, preferably 0.5-1.5 mm. If the thickness is extremely thin, the air-impervious property of the coat will be lost by the formation of pinholes or any mechanical damage of the coat during the reversion operation.

The tubular jacket is impregnated with a curable synthetic resin as it is introduced into the pipeline to be rehabilitated. It is important that the tubular lining material should be flexible if the reversion method is to be used so that it does not require a high fluid pressure for the reversion operation. In general, the reversion operation becomes more difficult as the thickness of the tubular lining material becomes greater. Consequently, good flexibility is required before curing, in addition to the pressure- and structural -resistance, for the cured tubular lining material.

Various kinds of tubular lining materials have been used as lining materials for pipes or pipelines.

Basically there are two types of tubular lining materials :
- UV light curable liners (type 1)
   This type of liner always includes a transparent foil made of a copolymer of PE-PA and a tubular jacket made of glass fiber to guarantee that a maximum of light passes through the lining material. With this type 1 lining material, the transparent sheet is not bonded to the tubular jacket and has to be peeled off after the lining material is introduced into the pipeline and hardened by exposure to UV light. These lining materials further comprise an exterior protective sheet, which protects the lining material from abrasion and also from light so as to avoid premature curing of the resin during storage.
   Such lining materials are sold f.ex. Brandenburger Liner GmbH of D-76829 Landau under the trade name "Brandeburger Liner" and Impreg of D-75392 Deckenpfronn under the trade name "Impreg Multiliner"
   The disadvantage of these type 1 UV cured liners is the use expensive glass fibers in the tubular jacket and the need of a transparent foil, which has to be removed after curing to ensure the passing of UV light.
- heat curable liners (type 2)
   this type of liner is available in various designs, the outer tubular jacket is made of felt and/or glass fibers. These lining materials are installed mainly by reversion, by pull in or by a combination pull in and reversion. These lining materials are well known and are commercially available from companies like Insituform, Norditube, Inliner USA etc

The disadvantage heat curable liners of type 2 is the long curing times and also the restricted quality assurance at each point of the liner. Indeed with hot water or steam curing, it is only possible to control the progress of the curing at the end points. It may happen that in certain locations of the pipeline, the lining material is in contact with a cold spot (f.ex. at cracks in the pipeline due to water infiltrations), the curing will not be complete and the lining material will present weak spot at these locations.

In the following the words "outer" and "inner" is used in relation to the installed lining material i.e. "outer" refers to the surface of the lining material which is located adjacent to the pipeline wall to be restored and "inner" surface refers to the opposite surface turned towards the inside of the pipeline. The words "exterior" and "interior" refer to the tubular lining material before installation.

If the reversion method is used to install the lining material, the lining material is turned inside out i.e. the "exterior" layer becomes the "inner" layer after installation. If the "pull in place" method is used, the lining material is not turned inside out, therefore the "exterior" layer of the lining material becomes the "outer" surface.

### Object of the invention

The object of the present invention is to provide a new type of tubular lining material for rehabilitation of pipelines, comprising an air/fluid-impervious and light-impervious inner layer of a polymer, an outer tubular jacket comprising a textile, a woven, a non-woven and / or a felt structure and a curable resin, which can be cured rapidly without using hot water or steam.

### General description of the invention

In order to overcome the above-mentioned problems, the present invention proposes a tubular lining material for rehabilitation of pipelines, useable in a renovation method wherein the tubular lining material, of which the coated tubular jacket is impregnated with a curable resin, is inserted into a pipeline and is allowed to advance within the pipeline as the tubular lining material is turned inside out under fluid pressure whereby the tubular lining material is applied to the surface of the pipeline.

Under some circumstances, a preliner is first installed into the pipeline. The lining material is then installed into this preliner instead of being installed directly into the pipeline.

The tubular lining material comprises an air-impervious and light-impervious inner layer of a synthetic material and is provided on the outside thereof with a outer tubular jacket, wherein the outer tubular jacket comprises a textile, a woven, a non-woven and / or a felt structure and a curable resin, which comprises a mixture of UV initiators and peroxides.

Surprisingly, it has now been found that even if the inner coatings and most of the times also the tubular jackets of such liners are considered impervious to light, it is possible to cure the liners with UV light instead of with hot water or steam and that it is possible to form a strong fabric-fiber-reinforced liner within a pipeline.

An advantage of the new liners is that the curing times are reduced up to 30% as compared to the curing times of traditional heat curable lining materials of type 2 with hot water or steam.

Another advantage as compared with liners type 2 is that the quality of the renovated pipeline is much higher because before curing, the liner may be controlled by camera for the presence of wrinkles.

Furthermore, the curing of the liner can be controlled more efficiently at each location, the occurrence of weak spots due to locally insufficient curing can be eliminated efficiently.

Although it has been tried to add peroxide type initiators to the UV curable liners of type 1 having an inner coating or sheet which is transparent to UV light (see for example EP 1 262 708 A1), it would not have occurred to those skilled in the art to add UV Initiators to the heat-curable liners as per type 2 because these liners with a PU coating and a felt tubular jacket are considered to be impervious to light. Those skilled in the art would therefore not have considered using UV initiators because the PU coating blocks off the incoming UV light very efficiently and therefore the UV initiators would not trigger the curing of the curable resin in the outer tubular jacket.

It has to be emphasized that the curing of the liners with UV light according to the invention cannot be achieved simply by increasing the amount of light or the intensity of light projected against the lining material so as to compensate for the losses inside the air-impervious and light-impervious inner cotaing. Indeed, in such a case of compensating for the losses, the lining material would be overheated and the fire hazard would be too high. Even in the traditional UV curable liners as per type 1, great care has to be taken not to expose the liner to an exaggerated light intensity and thus to a dangerously high temperature. Therefore, DE 198 17 413, wherein the problems generated by the local overheating of the liner is discussed, describes a rather complex system of controlling the exposure of traditional UV curable lining materials by varying the travel speed of the UV light source through the pipeline lined with a UV curable lining material as a function of the temperature at certain locations of the tubular liner. It is generally agreed that the exposure to UV light cannot be more than about 800 W/m² since otherwise the fire hazard is too important.

A further advantage of the tubular lining material according to the present invention is that the material costs are greatly reduced as compared to the traditional UV curable tubular lining materials as per type 1. Indeed, in these traditional UV-curable tubular lining materials, each component is chosen with regard to their light-transmitting properties. The components will be chosen so as to have a light transmission coefficient, which is as high as possible. In EP 1 262 708 A1, the tubular liner comprises a light transmissible inner protection sheet made of polyamide, polyethylene or PVC. The light transmission coefficient of such materials is well over 90% i.e these materials transmit much more than 90% of the incoming light. Furthermore, even the material of the outer jacket is made of a glass fiber mat, which has a good light transmission coefficient.

Furthermore, in traditional UV curable tubular liners, since the inner protective sheet is made of a light-pervious sheet such as polyamide, polyethylene or PVC and since these materials do not bind to the outer jacket and the resin after the curing, the inner protective sheet has to be peeled off (removed) after the tubular lining material is installed and cured inside the pipeline, which means an additional working step during installation. Furthermore, the outer tubular jacket of glass fiber impregnated with resin becomes exposed to the fluids transported through the renovated pipeline.

The protective sheets used for the outer tubular jacket used in the UV curable liners of type 1 are very sensitive to all impacts like mechanical treatment and especially the needed pressure for inflating the lining material has to be built up very carefully in various steps to avoid a damage. The inner coatings in the liners of type 2 are very robust and anchored to the outer tubular jacket impregnated with resin, the built up of pressure can be made more quickly and without any intermediary steps. Furthermore, any intermediate manholes in the pipeline do not need any reinforcement to avoid bursting of the liners at these locations during inflating.

According to a preferred embodiment of the invention, the polymer of the inner coating has a transmission factor of less than 30%, preferably less than 25 % and most preferably less than 15%.

It has to be noted that the transmission of the entire lining material i.e. outer jacket and inner coating may be lower than 1%.

The polymer of the inner layer or coating preferably comprises an elastomeric or flexible synthetic polymer such as polyurethane (PU). The use of PU has the advantages of being flexible - so that the liner can be produced undersized to allow it during inversion to adapt to the shape of the host pipe avoiding wrinkles, of being resistant to abrasion and of being impervious to fluids such as air and water.

Furthermore, the liner with the PU coating (which is on the inside after installation) confers a smooth surface, which enhances the flow of fluids inside the relined pipeline.

The polymer of the air-impervious and light impervious inner layer has usually a thickness within the range of 0.2-2.0 mm, preferably within the range of 0.5-1.5 mm.

The resin used in the present invention is preferably an unsaturated curable polyester resin. Polyester resins for lining pipes are (material wise) the most competitive solution. Suitable resin are sold by BASF/DSM of D-67056 Ludwigshafen under the trade names Palatal A410, Synolite 59313 or by Scott Bader of D-92632 Weiden under the trade names Crystic 4044T V01 or Crystic 3846.

The UV initiators are preferably chosen amongst the group consisting of benzyldimethylketal, bisacrylphosphine, α-hydroxyketone, α-aminoketone, BAPO, and phosphine oxide or a mixture thereof. It has to be emphasized however that the UV initiator has to be compatible with the particular resin, which is used.

The peroxides are advantageously chosen amongst the group consisting of alkyl perester and peroxydicarbonate or a mixture thereof.

Other objects, features and advantages of the present invention will become apparent more fully from the following description.

### Example 1: Transmission of UV Light through different types of commercially available heat-curable liners

A standard UV Lamp (Heraeus Strahler RQ 410 Z1 F, 45006373) was built in a housing with a hole. The liners were set in front of the hole and on the backside of the liners a UV measuring device (X29 - RCH-002-4, UVA-Blue, SN 6492 Recalibration 2005-09) was installed and the transmitted UV light was measured. The results of these comparative tests are listed in table 1.

**Table 1 : Transmission of UV light of different commercially available liners (without curable resin)**

| **Producer** | **Material** | **particularities** | **measurements (mW/cm²)** | **Transmission (%)** |
|---|---|---|---|---|
| | No liner | - | 257 | 100 |
| Norditube | PU Liner | - | 52 | 20,23 |
| Norditube | PU Liner | At the seam | 9,2 | 3.58 |
| Norditube | PU Liner | Complete, 2 layers, 4.5 mm nominal thickness | 6,3 | 2.45 |
| Norditube | TPP1 | - | 19,8 | 7.70 |
| Norditube | TPP1 Petroliner | - | 18,3 | 7.12 |
| Norditube | TPP1 Petroliner | At the seam | 12,9 | 5.02 |
| Norditube | PU Liner 2 | - | 35 | 13.62 |
| Norditube | PU Liner 2 | At the seam | 4,2 | 1.65 |
| Norditube | Hytrel | - | 7,9 | 3.07 |
| Norditube | PE II | - | 25,5 | 9.92 |
| Norditube | Nordiflex (SP45X) | - | 2,4 | 0.93 |
| Norditube | Nordiflex (SP45X) | At the seam | 1,9 | 0.73 |
| Norditube | Nordiflex (SP80) | - | 0,4 | 0.16 |
| Norditube | Nordiflex (SP80) | At the seam | 0.2 | 0.08 |

### BRIEF DESCRIPTION OF DIFFERENT TESTS

The present invention can more fully be understood from the following description in which:
Test 1 is a lining material according to the invention
Test 2 is a lining material with a UV initiator only
Test 3 is a lining material with a peroxide initiator only

The lining material is a traditional lining material of type sold by Norditube Technologies under the trade-name PU Liner with an inner PU coating of 0.5 mm and a felt of 3-9 mm. The lining material was impregnated with 100 w/w parts of a unsaturated polyester resin sold under the trade-name Crystic 4044 T V01 by Scott Bader and 40 w/w parts of Al(OH)₃. The lining material of test 1 further contained 1 w/w part of Tri 21 (of Akzo Nobel) and 0,7 w/w part of D2 (BAPO of Ciba Spezialitäten Chemie), the lining material of test 2 contained only 0,7 w/w part of D2 and no Tri 21 whereas the lining material of test 3 further contained only 1 w/w part of Tri 21 but no D2.

The lining materials were exposed to UV light as described above and after an exposure of 30 seconds, the surface of the lining materials of tests 1 and 2 became hard and the UV lamp was shut off. In case of the lining material of test 3, the lamp was shut off after three minutes.

Immediately after exposure, the lining materials were put on two fins and weighted in the middle with 10 kg. The lining materials with a mixture of UV and peroxide initiators (test 1) showed a very good result; indeed, when the lining material was stiff, it did not bend after a weight of 10 kg was put onto the lining material. The resin cured well.

The second lining material (with UV initiator only - test 2) is only partially cured and caved in pretty much after the weight of 10 kg was put onto the lining material.

The third lining material (with peroxide initiator only - test 3) did not cure at all and offers no resistance when the weight of 10 kg was put onto the lining material after an exposure to UV light which was five times longer than the preceding two cases.

As many apparently widely different embodiments of the present invention may be made without departing from the scope thereof, it is to be construed that the present invention is not limited to the specific embodiments thereof except as defined in the appended claims.

## Claims

1. A tubular lining material for reinforcing pipelines comprising an air-impervious and light-impervious inner layer of a polymer, an outer tubular jacket comprising a textile, a woven, a non-woven and / or a felt structure and a curable resin, **characterised in that** said resin comprises a mixture of UV initiators and peroxides.

2. A tubular lining material according to claim 1, wherein the polymer of the inner layer has a transmission factor of less than 50%

3. A tubular lining material according to claim 1 or 2, wherein the polymer of the inner layer comprises an flexible synthetic polymer such as polyurethane.

4. A tubular lining material according to any of the preceding claims, wherein the polymer of the air-impervious inner layer is used with a thickness within the range of 0.2-2.0 mm, preferably 0.5-1.5 mm.

5. A tubular lining material according to any of the preceding claims, wherein the curable resin is an unsaturated polyester resin.

6. A tubular lining material according to any of the preceding claims, wherein the UV initiators are chosen amongst the group consisting of benzyidimethylketal, bisacrylphosphine, α-hydroxyketone, α-aminoketone, BAPO, and phosphine oxide or a mixture thereof,

7. A tubular lining material according to any of the preceding claims, wherein the peroxydes are chosen amongst the group consisting of alkyl perester and peroxydicarbonate or a mixture thereof.

## Patentansprüche

1. Schlauchförmiges Auskleidungsmaterial zum Verstärken von Rohrleitungen, das eine luftundurchlässige und lichtundurchlässige innere Schicht aus einem Polymer, eine äußere schlauchförmige Hülle umfasst, die eine Textilie, einen Webstoff, einen Vliesstoff und/oder eine Filzstruktur und einen härtbaren Kunststoff umfasst, **dadurch gekennzeichnet, dass** der Kunststoff ein Gemisch von UV-Initiatoren und Peroxiden umfasst.

2. Schlauchförmiges Auskleidungsmaterial nach Anspruch 1, wobei das Polymer der inneren Schicht einen Durchlässigkeitsfaktor von weniger als 50 % aufweist.

3. Schlauchförmiges Auskleidungsmaterial nach Anspruch 1 oder 2, wobei das Polymer der inneren Schicht ein flexibles synthetisches Polymer wie Polyurethan umfasst

4. Schlauchförmiges Auskleidungsmaterial nach einem der vorhergehenden Ansprüche, wobei das Polymer der luftundurchlässigen inneren Schicht mit einer Dicke im Bereich von 0,2 - 2,0 mm, vorzugsweise 0,5 - 1,5 mm verwendet wird

5. Schlauchförmiges Auskleidungsmaterial nach einem der vorhergehenden Ansprüche, wobei es sich bei dem härtbaren Kunststoff um einen ungesättigten Polyesterkunststoff handelt.

6. Schlauchförmiges Auskleidungsmaterial nach einem der vorhergehenden Ansprüche, wobei die UV-Initiatoren aus der Gruppe ausgewählt sind, die aus Benzyldimethylketal, Bisacrylphosphin, α-Hydroxyketon, α-Aminoketon, BAPO und Phosphinoxid oder einem Gemisch davon besteht.

7. Schlauchförmiges Auskleidungsmaterial nach einem der vorhergehenden Ansprüche, wobei die Peroxide aus der Gruppe ausgewählt sind, die aus Alkylperester und Peroxydicarbonat oder einem Gemisch davon besteht.

## Revendications

1. Matériau de revêtement tubulaire pour renforcer des canalisations comprenant une couche interne d'un polymère étanche à l'air et étanche à la lumière, une chemise tubulaire externe comprenant un textile, un tissé, un non-tissé et/ou un feutre et une résine durcissable, **caractérisé en ce que** ladite résine comprend un mélange d'initiateurs UV et de peroxydes.

2. Matériau de revêtement tubulaire selon la revendication 1, dans lequel le polymère de la couche interne a un facteur de transmission inférieur à 50%.

3. Matériau de revêtement tubulaire selon la revendication 1 ou 2, dans lequel le polymère de la couche interne comprend un polymère synthétique flexible tel que le polyuréthane

4. Matériau de revêtement tubulaire selon l'une quelconque des revendications précédentes, dans lequel le polymère de la couche interne imperméable à l'air est utilisé avec une épaisseur comprise dans la plage de 0,2 à 2,0 mm, de préférence de 0,5 à 1,5 mm.

5. Matériau de revêtement tubulaire selon l'une quelconque des revendications précédentes, dans lequel la résine durcissable est une résine polyester insaturé

6. Matériau de revêtement tubulaire selon l'une quelconque des revendications précédentes, dans lequel les initiateurs UV sont choisis dans le groupe constitué du benzyldiméthylcétal, de la bisacrylphosphine, de l'α-hydroxycétone, de l'α-aminocétone, du BAPO et de l'oxyde de phosphine ou d'un de leurs mélanges

7. Matériau de revêtement tubulaire selon l'une quelconque des revendications précédentes, dans lequel les peroxydes sont choisis dans le groupe constitué des peresters d'alkyle et des peroxydicarbonates ou d'un de leurs mélanges
